# EUROPÄISCHE PATENTSCHRIFT

(11) **EP 2 218 602 B1**
(45) Veröffentlichungstag und Bekanntmachung des Hinweises auf die Patenterteilung: **27.06.2012**
(21) Anmeldenummer: 09153025.3
(22) Anmeldetag: 17.02.2009
(51) Int. Cl.: B60J 7/06, B60J 5/06

(54) **Schiebeplanenaufbau eines Nutzfahrzeugs**
Sliding tarpaulin for a commercial vehicle
Bâche coulissante d'un véhicule utilitaire

(43) Veröffentlichungstag der Anmeldung: 18.08.2010
(73) Patentinhaber: Schmitz Cargobull AG, 48341 Altenberge (DE)
(72) Erfinder: Runde, Felix, 48268 Greven (DE); Tappe, Andreas, 48493 Wettringen (DE)
(74) Vertreter: Cohausz & Florack

(56) Entgegenhaltungen:
- DE-U1- 20 303 884
- DE-U1-202008 002 993
- GB-A- 2 071 582

## Beschreibung

Die Erfindung betrifft einen Schiebeplanenaufbau eines Nutzfahrzeugs, insbesondere Lastwagens, Anhängers, Sattelaufliegers und/oder Wechselbehälters, mit einer Plane zum Abdecken des Schiebeplanenaufbaus, wenigstens einem Holm und wenigstens einem zum Öffnen des Schiebeplanenaufbaus entlang des Holms verschiebbaren Schlitten, wobei die Plane über ein Verbindungselement an einer Außenseite des Schlittens fixiert ist und wobei das Verbindungselement mit einem Halteelement verbunden und über das Halteelement unverlierbar am Schlitten gehalten ist.

Schiebeplanenaufbauten sind aus dem Stand der Technik in verschiedenen Ausführungen bekannt. Die Planen sind dabei in der Regel an mit Laufrollen versehenen Schlitten befestigt, die an den gegenüberliegenden Rändern der Plane an Holmen gehalten sind. Die Holme verlaufen längs zum Nutzfahrzeug und sind Teil einer den Aufbau stabilisierenden Rahmenstruktur. Um den Schiebeplanenaufbau leicht öffnen und wieder verschließen zu können, sind die Schlitten entlang der Holme verschiebbar gelagert. Die Gebrauchsenunterschrift DE 202 008 002 993 U1 zeigt einen Schiebeplanen aufbar gemäß dem Oberbegriff des Anspruchs 1.

Schiebeplanenaufbauten können nicht so zuverlässig verschlossen werden, dass ein unbefugter Zugriff in den Laderaum und damit auf die Ladung ausgeschlossen ist. Es kann daher gewünscht sein, dass die Schiebeplanenaufbauten nach dem ordnungsgemäßen Verschließen nicht mehr, ohne sichtbare Spuren zu hinterlassen, geöffnet und wieder verschlossen werden können. Auf diese Weise kann eine erfolgte Manipulation der Ladung nachträglich festgestellt werden.

Entsprechend gesicherte Schiebeplanenaufbauten werden beispielsweise von Zollbehörden gefordert, um illegale grenzüberschreitende Warentransporte zu unterbinden. Man spricht in diesem Zusammenhang allgemein von zollsicheren Nutzfahrzeugaufbauten. Schiebeplanenaufbauten der genannten Art könnten bedarfsweise aber auch ohne eine Vorschrift oder Zulassung einer Zollbehörde ganz allgemein genutzt werden, um Ladungen während des Transports gegenüber einem unbefugten Zugriff zu sichern. Für den Empfänger einer Warenlieferung ist dann etwa ersichtlich, ob die Ladung unverändert ist oder ob eine Manipulation stattgefunden hat.

In diesem Zusammenhang ist bisher vorgeschlagen worden, die Plane mit einer Verbindung an den Schlitten des Schiebeplanenaufbaus zu befestigen, die nur noch unter Zerstörung der Verbindung gelöst werden kann. Die Verbindung kann nach dem Öffnen des Schiebeplanenaufbaus jedoch unter Umständen durch die Verwendung von entsprechenden Ersatzteilen in einen Zustand zurückversetzt werden, der im Wesentlichen dem ursprünglichen Zustand entspricht. Dann ist nicht ohne weiteres erkennbar, ob eine Manipulation der Ladung stattgefunden hat. Zudem ist die Montage entsprechender Verbindungen recht aufwändig und zeitintensiv, was sich negativ auf die Herstellungskosten des Schiebeplanenaufbaus auswirkt.

Daher liegt der vorliegenden Erfindung die Aufgabe zu Grunde, den eingangs genannten und zuvor näher beschriebenen Schiebeplanenaufbau derart auszugestalten und weiterzubilden, dass der Schiebeplanenaufbau einerseits gegenüber einem unbefugten Zugriff auf den Laderaum gesichert und andererseits kostengünstig zu fertigen ist.

Diese Aufgabe ist bei einem Schiebeplanenaufbau nach dem Oberbegriff des Anspruchs 1 durch die Merkmale des kennzeichnenden Teils gelöst.

Der Schiebeplanenaufbau kann wahlweise Teil eines Lastwagens, eines Anhängers, eines Sattelaufliegers oder eines Wechselbehälters sein, da Schiebeplanenaufbauten dieser Nutzfahrzeuge recht ähnlich aufgebaut sind und ähnlich gegenüber einem unbefugten Zugriff auf den Laderaum gesichert werden können. Dies bedeutet insbesondere, dass der Schiebeplanenaufbau nach dem ordnungsgemäßen Verschließen nicht mehr, ohne sichtbare Spuren zu hinterlassen, geöffnet und wieder verschlossen werden kann. Es kann also nachträglich eine Manipulation des Laderaums bzw. der Ladung des Schiebeplanenaufbaus ohne weiteres festgestellt werden.

Der Schiebeplanenaufbau weist wenigstens eine Plane auf, die oberhalb des Laderaums oder seitlich dazu abgespannt ist, um den Laderaum zu verschließen. Zum Öffnen des Laderaums bzw. des Schiebeplanenaufbaus kann die Plane von einer offenen in eine geschlossene Position geschoben werden. Dazu ist die Plane an der Außenseite wenigstens eines Schlittens befestigt und der Schlitten entlang wenigstens eines Holms des Schiebeplanenaufbaus verschiebbar ausgebildet.

Zur Befestigung der wenigstens einen Plane an dem wenigstens einen Schlitten ist ein Verbindungselement vorgesehen, das mit einem Halteelement verbunden ist, so dass das Verbindungselement und die Plane unverlierbar am Schlitten gehalten sind. Das Verbindungselement ist von einer Außenseite des Schlittens montiert.

Das Halteelement ist in einem Zwischenraum zwischen dem Schlitten und dem Holm vorgesehen. Das Halteelement kann insgesamt im Zwischenraum angeordnet sein. Bedarfsweise ist das Halteelement aber auch nur teilweise im Zwischenraum angeordnet. Vorzugsweise ist dabei jedoch das Haltelement im Zwischenraum mit dem Verbindungsmittel verbunden. Mit anderen Worten ist ein Verbindungsabschnitt des Halteelements mit dem Verbindungselement vorzugsweise im Zwischenraum vorgesehen. Der Verbindungsabschnitt ist damit vorzugsweise nicht von außen zugänglich vorgesehen.

Der Zwischenraum und das Halteelement sind dabei so aufeinander abgestimmt, dass eine Montage des Halteelements im Zwischenraum verhindert ist. Die Montage des Haltelements im Zwischenraum zwischen dem Schlitten und dem Holm muss nicht bereits denkgesetzlich ausgeschlossen sein. Es reicht aus, wenn die Montage praktisch unmöglich ist, d.h. einen Aufwand erfordert, der groß im Vergleich zu dem durch eine Manipulation der Ladung zu erzielenden Nutzen ist. Die Möglichkeit einer Manipulation der Verbindung zwischen dem Verbindungselement und dem Halteelement kann dann in Kauf genommen werden, da unbefugte Personen dann trotzdem von einer Manipulation der Ladung abgehalten sind.

Da das Halteelement nicht im Zwischenraum montiert werden kann, ist eine Manipulation des Schiebeplanenaufbaus ausgeschlossen. Sollte das Verbindungselement entfernt werden, um Zugang zum Laderaum des Nutzfahrzeugs zu erhalten, wird das Halteelement beispielsweise zerstört, so dass es ersetzt werden muss. Das Halteelement kann aber auch nur von dem Verbindungselement gehalten sein, so dass das Halteelement beim Herausziehen des Verbindungselements nicht an Ort und Stelle bleibt, sondern herunterfällt. Das Halteelement muss also zum Wiederherstellen der Verbindung mit dem Verbindungselement erneut in die ursprüngliche Position gebracht werden. Dies kann vorliegend auch unter einer Montage des Halteelements verstanden werden.

Die Verbindung zwischen dem Halteelement einerseits und dem Verbindungselement und/oder dem Schlitten andererseits ist also stets so ausgebildet, dass nach dem Trennen von Verbindungselement und Halteelement eine Montage des ursprünglichen Halteelements oder eines neuen Halteelements erforderlich ist, um erneut eine Verbindung mit dem ursprünglichen oder einem neuen Verbindungselement herzustellen. Unter einer Montage kann dabei jeder Montageschritt verstanden werden, um das Halteelement in die Lage zu versetzen, mit dem von außen montierten Verbindungselement verbunden zu werden. Kann die Verbindung zwischen dem Verbindungselement und dem Halteelement nicht wieder wie ursprünglich hergestellt werden, ist nachträglich eine erfolgte Manipulation des Schiebeplanenaufbaus erkennbar.

In diesem Zusammenhang ist zu beachten, dass das Halteelement bereits dann nicht im Zwischenraum zwischen dem Schlitten und dem Holm montiert werden kann, wenn es in der montierten Position nicht hinreichend zugänglich ist. Dann ist das Halteelement auch für das Durchführen einer Montage im Zwischenraum nicht zugänglich. Dies gilt selbst dann, wenn der Zwischenraum ansonsten hinreichend bemessen wäre, um das Halteelement zu montieren. Alternativ oder zusätzlich kann der Zwischenraum aber auch in wenigstens einer Richtung so schmal bemessen sein, dass das Halteelement in der für die zur Montage erforderlichen Ausrichtung gegenüber dem Schlitten nicht im Zwischenraum positioniert werden kann.

Wenn die Zugänglichkeit des Halteelements im Zwischenraum zwischen dem Schlitten und dem Holm jedenfalls unter normalen Umständen verhindert ist, besteht grundsätzlich die Möglichkeit, dass das Halteelement im Zwischenraum mit einem Spezialwerkzeug zugänglich ist. Dies kann toleriert werden, wenn der für eine Montage zu betreibende Aufwand hinreichend groß ist oder wenn ein neues Halteelement in den Zwischenraum eingebracht werden muss, dies aber aus Platzgründen oder Gründen der Zugänglichkeit verhindert ist.

Es besteht jedoch selbstverständlich die Möglichkeit, das Halteelement zu montieren. Dies kann wahlweise eine Montage des Halteelements am Schlitten, ein Verbinden des Halteelements mit dem Verbindungselement und/oder eine andere Art der Montage, die der Verbindung des Halteelements mit dem Verbindungselement vorausgeht, sein. Bevorzugt ist es dabei, wenn das Halteelement vor dem Verbinden des Schlittens mit dem Holm am Schlitten und/oder am Verbindungselement montiert wird. Die Montage des Halteelements erfolgt dann insbesondere von der auf diese Weise gut zugänglichen Innenseite des Schlittens. Dies kann zwar bedeuten, dass eine Manipulation des Schiebeplanenaufbaus durch eine Trennung von Schlitten und Holm möglich wäre. Dies kann allerdings durch andere Maßnahmen verhindert oder aufgrund des dazu erforderlichen, immensen Aufwands tolerierbar sein.

Wenn das Halteelement zunächst lediglich am Schlitten vormontiert wird, kann die Plane nach dem Zusammenfügen von Schlitten und Holm sehr einfach durch Montage des Verbindungselements von außen am Schlitten befestigt werden. Am nahezu fertigen Schiebeplanenaufbau sind dann keine aufwändigen Fertigungsschritte mehr erforderlich. In einem einfachen Fall wird das Verbindungselement lediglich von außen durch Öffnungen in der Plane und dem Schlitten in das vormontierte Halteelement eingesteckt.

Ist das Halteelement nur mit dem Verbindungselement nicht aber auch mit dem Schlitten verbunden, kann ein sehr einfaches Halteelement verwendet werden. Das Haltelement kann beispielsweise einteilig, etwa in Form einer Wellensicherung, ausgebildet sein. Das Halteelement ist von außen nicht zugänglich und muss daher nicht selbst eine Manipulation verhindern können. Auch ein konstruktiv aufwändig gefertigtes Halteelement ist aus demselben Grund nicht zwingend erforderlich. Es bieten sich dabei insbesondere Halteelemente an, die in Art eines Rings das Verbindungselement umgreifen und beispielsweise in eine radial umlaufende Nut des Verbindungselements eingreifen. Das Verbindungselement, vorzugsweise ein Schaftabschnitt des Verbindungselements, ist dann beispielsweise durch das Halteelement durchgesteckt.

Bei einer ersten Ausgestaltung des Schiebeplanenaufbaus ist der Zwischenraum zwischen dem Schlitten und dem Holm unabhängig von der jeweiligen Position des Schlittens entlang des Holms so ausgebildet, dass eine Montage des Halteelements im Zwischenraum verhindert ist. Dann ist die Montage des Halteelements im Zwischenraum zwischen dem Schlitten und dem Holm nicht nur in einer bestimmten Position des Schlittens, sondern in im Wesentlichen allen Positionen des Schlittens ausgeschlossen. Um den konstruktiven Aufwand gering zu halten, kann sich der wenigstens eine Holm im Wesentlichen über die gesamte Länge des Schiebeplanenaufbaus erstrecken.

Das Halteelement kann zusätzlich oder alternativ einteilig ausgebildet sein. Das Halteelement kann dann einfach und kostengünstig gefertigt und mit dem Verbindungselement verbunden werden.

Der Schiebeplanenaufbau kann besonders leicht geöffnet werden, wenn der Schlitten als Laufwagen ausgebildet ist, wozu der Laufwagen wenigstens zwei Rollen aufweist. Erfindungsgemäß ist das Halteelement zwischen den beiden Rollen angeordnet. Das Halteelement ist dann von den beiden Rollen von einander gegenüberliegenden Seiten abgeschirmt, so dass die Zugänglichkeit des Halteelements eingeschränkt ist. Dabei kann es zweckmäßig sein, wenn die wenigstens zwei Rollen auf einer gemeinsamen Lauffläche des Holms abrollen. Dann kann das Halteelement auch durch den Teil des Holms abgeschirmt sein, der die Lauffläche der wenigstens zwei Rollen bildet. Dazu sollte die Lauffläche breit sein im Vergleich zum Halteelement. Alternativ oder zusätzlich zu der zuvor beschriebenen Ausgestaltung ist aber auch jede andere Anzahl von Laufrollen und Laufflächen sowie jede andere Art der Anordnung der Laufrollen und Laufflächen denkbar.

Damit das Halteelement auch aus einer Richtung, die parallel zu den Achsen der wenigstens zwei Rollen angeordnet sein kann, vom Holm abgeschirmt wird, bietet es sich an, wenn der Holm ein L-Profil aufweist und die Lauffläche an einem Schenkel, vorzugsweise dessen Innenseite, angeordnet ist. Besonders bevorzugt ist es in diesem Zusammenhang, wenn der Holm ein die beiden Rollen bedarfsweise jedenfalls teilweise umgreifendes U-Profil aufweist. Die Lauffläche kann dann an einem äußeren Schenkel, und zwar an dessen Innenseite, vorgesehen sein. Auf diese Weise ist es möglich, das zwischen den beiden Rollen angeordnete Halteelement von drei Richtungen abzuschirmen, wobei jeder der Schenkel vorzugsweise im Wesentlichen senkrecht zu einer dieser Richtungen ausgerichtet ist. Wenn die beiden äußeren Schenkel des U-Profils nur unwesentlichen weiter voneinander beabstandet sind, als der Durchmesser der Rollen, kann das Halteelement sehr gut durch die Rollen von zwei weiteren Richtungen abgeschirmt sein, die vorzugsweise im Wesentlichen parallel zur Verschieberichtung des Schlittens und bedarfsweise zusätzlich senkrecht zu den vorgenannten drei Richtungen verlaufen, aus denen das U-Profil das Halteelement abschirmt. Die verbleibende sechste Richtung kann dann in einfacher Weise durch den Schlitten selbst abgeschirmt werden. Die zuvor genannten sechs Richtungen entsprechen vorzugsweise jeweils paarweise einer von drei zueinander orthogonalen Raumrichtungen.

Die Zugänglichkeit zum Montageort des Halteelements und/oder im Falle eines nicht manipulierten Schiebeplanenaufbaus zum bereits montierten Halteelement, kann weiter dadurch erschwert werden, dass der Holm bis auf einen Spalt an den Schlitten heranreicht. Dabei ist der Spalt vorzugsweise zwischen dem Holm und einem unteren Rand des Schlittens ausgebildet. Wenn der Spalt schmal genug ist, kann auf diese Weise verhindert werden, dass unbefugte Personen zwischen dem Schlitten und dem Holm hindurchgreifen. Unter einem Spalt wird folglich ein Spalt verstanden, der jedenfalls das Hindurchgreifen einer unbefugten Person verhindert. Vorzugsweise ist der Spalt jedoch so schmal ausgebildet, dass kein Halteelement durch den Spalt in den Zwischenraum eingebracht werden kann, das baugleich mit dem vorhandenen Halteelement ist. Die Verwendung eines Ersatzteils ist dann ausgeschlossen. Aus konstruktiver Sicht ist es bevorzugt, wenn ein Schenkel des L-Profil oder des U-Profils bis auf einen Spalt an den Splitten bzw. einen unteren Rand des Schlittens heranreicht. Dies ermöglicht zudem eine kompakte Bauweise des Holms.

Es kann auch vorgesehen sein bzw. nach einer Ausführungsform der Erfindung ist vorgesehen, dass der Holm unter Ausbildung eines Spalts mit dem unteren Rand des Schlittens gegenüber diesem nach außen vorsteht. Die Zugänglichkeit des Montageorts des Halteelements wird dadurch noch zuverlässiger eingeschränkt. Dies lässt sich konstruktiv einfach realisieren, wenn ein Schenkel des L-Profils des Holms oder aber ein äußerer Schenkel des U-Profils des Holms unter Ausbildung eines Spalts mit dem unteren Rand des Schlittens gegenüber diesem nach außen vorsteht. Der nach außen gegenüber dem unteren Rand des Schlittens hervorstehende Schenkel weist dann unter Umständen, vorzugsweise auf seiner Innenseite, die Lauffläche für die wenigstens zwei Rollen auf. Ein entsprechend ausgebildeter Holm lässt sich zweckmäßig fertigen.

Das Verbindungselement kann formschlüssig mit dem Halteelement verbunden sein. Dies ist einfach und wirkungsvoll. Die formschlüssige Verbindung kann dabei insbesondere als Rastverbindung ausgestaltet sein. Grundsätzlich kommen aber auch nicht formschlüssige Verbindungen in Frage, solange die Verbindung nicht von außen manipuliert werden kann.

Nach einer Ausgestaltung des Schiebeplanenaufbaus ist das Halteelement unverlierbar, vorzugsweise formschlüssig, mit dem Schlitten verbunden. Es besteht dann also nicht lediglich eine Verbindung des Halteelements zum Verbindungselement. Folglich kann das Halteelement vormontiert sein, d.h. vor dem Verbinden mit dem Verbindungselement bereits am Schlitten festgelegt werden. Die Montage des Halteelements selbst kann dann in einfacher Weise bereits vor dem Verbinden des Schlittens mit dem Holm erfolgen. Dies erlaubt letztlich eine einfachere, schnellere und kostengünstigere Montage des Schiebeplanenaufbaus insgesamt, da beispielsweise nach dem Anbringen des Schlittens am Holm lediglich das Verbindungselement von außen in das Halteelement eingeschoben werden muss, ohne dabei das Halteelement in Position zu halten.

Damit die ursprüngliche Verbindung zwischen dem Verbindungselement und dem Halteelement nach dem Manipulieren der Ladung nicht wieder hergestellt werden kann, sollte sich das Verbindungselement nur unter Zerstörung und/oder Blockierung des Halteelements vom Halteelement lösen lassen. Unter einem Blockieren des Halteelements wird beispielsweise verstanden, dass das Haltelement das Verbindungselement nicht mehr wie ursprünglich aufnehmen kann. Dies wird etwa erreicht, wenn bei der Demontage des Verbindungselements ein Teil des Verbindungselements im Halteelement zurückbleibt, so dass kein Verbindungselement mehr so weit wie erforderlich in das Halteelement eingeführt werden kann.

Es ist aber auch möglich, dass das Halteelement lediglich am Verbindungselement befestigt ist. Dann kann das Halteelement als ein formschlüssig mit dem Verbindungselement zusammenwirkender und von dem Verbindungselement durchdrungener Ring ausgebildet sein. Es kommt beispielsweise auch eine an sich bekannte Wellensicherung in Frage. Wird das Verbindungselement dann vom Halteelement gelöst, kann das Halteelement gegebenenfalls zerstört werden und/oder nach unten fallen, so dass das Halteelement anschließend nicht mehr für eine Verbindung mit dem Verbindungselement zur Verfügung steht.

Das Halteelement kann einfach durch Einstecken von einer Innenseite in den Schlitten montiert werden, ohne dass dabei die Gefahr einer Manipulation des Halteelements von außen besteht. Das Halteelement sollte dann jedoch nicht auch von einer Außenseite des Schlittens montierbar sein. Bevorzugt ist es, wenn das Halteelement von einer Innenseite des Schlittens durch eine Öffnung des Schlittens durchgesteckt ist, da das Halteelement dann problemlos in der Öffnung des Schlittens festgelegt werden kann.

Dazu weist das Halteelement bedarfsweise wenigstens einen Flansch auf. Das Halteelement kann dann nicht gegen den Widerstand des Flansches aus dem Schlitten herausgezogen werden. Dabei kann der wenigstens eine Flansch sowohl auf einer Innenseite als auch auf einer Außenseite des Schlittens vorgesehen sein, je nachdem in welche Richtung das Herausziehen des Halteelements aus dem Schlitten verhindert werden soll. Vorzugsweise weist das Halteelement zwei Flansche auf, von denen ein Flansch auf der Innenseite des Schlittens und der andere Flansch auf der Außenseite des Schlittens vorgesehen sind. Dann kann einer der beiden Flansche als Anschlag beim Einstecken des Halteelements in die Öffnung des Schlittens verwendet werden, während der andere Flansch verhindert, dass das Halteelement in die Gegenrichtung wieder aus der Öffnung herausgedrückt werden kann.

Das Halteelement kann dabei so ausgebildet sein, dass das Halteelement im Bereich des Flansches zusammengedrückt werden und in diesem Zustand beispielsweise ohne weiteres in die Öffnung des Schlittens hinein und/oder durch die Öffnung des Schlittens hindurchgeschoben werden kann. Im zusammengedrückten Zustand ist beispielsweise der Durchmesser des Flansches geringer als der Durchmesser der Öffnung im Schlitten. Da das Halteelement bevorzugt von der Innenseite des Schlittens montiert wird, ist vorzugsweise das der Außenseite des Schlittens zugewandte Ende des Halteelements zum Zusammendrücken und Durchstecken durch die Öffnung des Schlittens ausgebildet. Dies kann konstruktiv einfach dadurch ereicht werden, dass das der Außenseite des Schlittens zugewandte Ende des Halteelements, insbesondere der Flansch, wenigstens eine Aussparung aufweist, wobei zwei einander gegenüberliegende Aussparungen das Zusammendrücken des entsprechenden Endes und/oder des Flansches weiter vereinfachen.

Vorzugsweise ist das Halteelement derart ausgebildet, dass eine Demontage des Halteelements bei eingesetztem Verbindungselement verhindert ist. Dadurch wird eine mögliche Manipulation des Schiebeplanenaufbaus erschwert. Die Demontage des Halteelements kann bei eingestecktem Verbindungselement etwa dadurch verhindert werden, dass das Halteelement an dem der Außenseite des Schlittens zugewandten Ende nicht mehr zusammengedrückt werden kann, um vom Querschnitt her durch die Öffnung im Schlitten zu passen.

Um die Plane umlaufend zu sichern, kann die Plane über mehrere Verbindungselemente an den Außenseiten mehrerer Schlitten fixiert sein. Je nach Ausgestaltung des Schiebeplanenaufbaus können die Schlitten auch an einander gegenüberliegenden Rändern der Plane vorgesehenen sein, wobei dann vorzugsweise auch an jeder Seite der Plane ein Holm zur Aufnahme eines Teils der Schlitten vorgesehen ist.

Dabei befinden sich die einander gegenüberliegenden Ränder der Plane vorzugsweise an gegenüberliegenden Seiten des Nutzfahrzeugs. In diesem Falle handelt es sich beispielsweise um eine Verdeckplane eines Schiebeverdecks. Weiter vorzugsweise verlaufen die an den Schlitten fixierten Ränder der Plane in Längsrichtung des Nutzfahrzeugs. Anderenfalls kann die Plane aber auch eine seitlich an dem Nutzfahrzeug, vorzugsweise vertikal, angeordnete Seitenplane sein.

Bei dem Schiebeplanenaufbau handelt es sich vorzugsweise aber nicht zwingend um einen sogenannten zollsicheren Schiebeplanenaufbau, der von einer Zollbehörde zur Vermeidung illegaler grenzüberschreitender Warentransporte zugelassen bzw. abgenommen ist.

Die Erfindung wird nachfolgend anhand einer lediglich Ausführungsbeispiele darstellenden Zeichnung näher erläutert. In der Zeichnung zeigt
- Fig. 1: ein Nutzfahrzeug mit einem ersten Ausführungsbeispiel des erfindungsgemäßen Schiebeplanenaufbaus in perspektivischer Ansicht,
- Fig. 2: das Detail II des Schiebeplanenaufbaus aus Fig. 1,
- Fig. 3: das Detail des Schiebeplanenaufbaus aus Fig. 2 in einem Schnitt entlang der Ebene III-III aus Fig. 2,
- Fig. 4: das Detail des Schiebeplanenaufbaus aus Fig. 3 in einem Schnitt entlang der Ebene IV-IV aus Fig. 3,
- Fig. 5: ein Halteelement eines zweiten Ausführungsbeispiels des erfindungsgemäßen Schiebeplanenaufbaus,
- Fig. 6: ein Detail eines dritten Ausführungsbeispiels des erfindungsgemäßen Schiebeplanenaufbaus in einer Schnittansicht gemäß Fig. 4,
- Fig. 7: ein Detail eines vierten Ausführungsbeispiels des erfindungsgemäßen Schiebeplanenaufbaus unter Verzicht auf den Holm in einer Schnittansicht gemäß Fig. 3 und
- Fig. 8: das Verbindungselement und das Halteelement des Schiebeplanenaufbaus aus Fig. 7 im verbundenen Zustand in einer Seitenansicht.

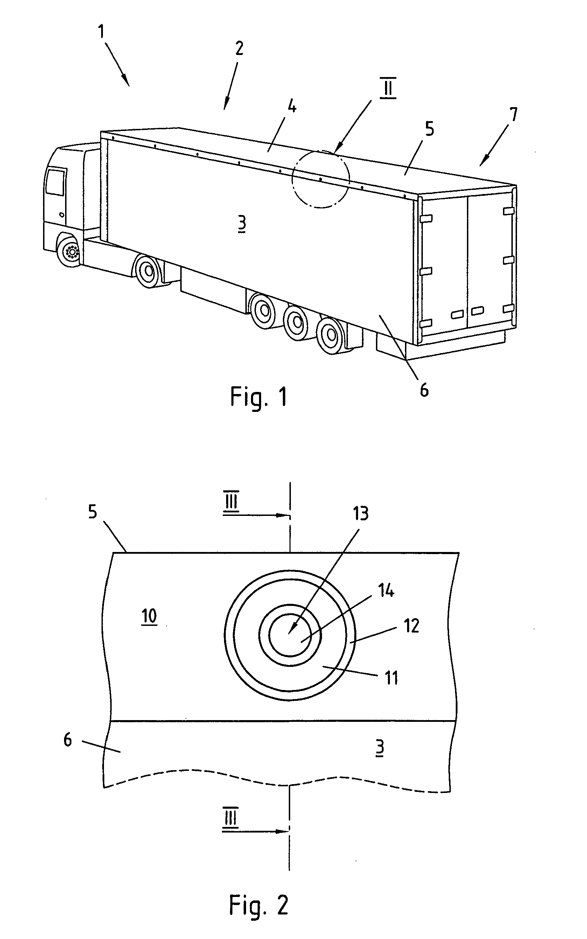

In der Fig. 1 ist ein Nutzfahrzeug 1 in Form eines Sattelaufliegers mit zugehörigem Zugfahrzeug dargestellt. Der Sattelauflieger umfasst einen Schiebeplanenaufbau 2, der sowohl an seinen Seitenwänden 3 als auch am Dach 4 Planen 5,6 aufweist, um den Schiebeplanenaufbau 2 zu verschließen. Das Dach 4 des dargestellten und insoweit bevorzugten, zollsicheren Schiebeplanenaufbaus 2 ist als Schiebeverdeck 7 ausgebildet. Dies bedeutet, dass die am Dach 4 vorgesehene Plane 5 zum Beladen und Entladen des Nutzfahrzeugs 1 geöffnet werden kann. Dazu wird beispielsweise eine Verriegelung am hinteren Ende des Dachs 4 gelöst und das Schiebeverdeck 7 nach vorne geschoben, wobei einzelne, als Laufwagen ausgebildete und mit der Plane 5 verbundene Schlitten 8 entlang der zu beiden Seiten des Nutzfahrzeugs 1 verlaufenden Holme 9 verschoben werden. Die Plane 5 wird daher im geöffneten Zustand nach Art einer Ziehharmonika aufgefaltet, auch wenn die Öffnung des Schiebverdecks 7 in die entgegengesetzte Richtung erfolgen sollte.

Die Plane 5 des Schiebeverdecks 7 ist quer über die gesamte Breite des Nutzfahrzeugs 1 abgespannt und weist einen Überstand 10 auf, der an den Seitenwänden 3 des Nutzfahrzeugs 1 angelegt ist. Dort ist der Überstand 10 in mehr oder weniger regelmäßigen Abständen an den Schlitten 8 des Schiebeplanenaufbaus 2 fixiert ist. Die Befestigung der Plane 5 ist an beiden Seitenwänden 3 des Nutzfahrzeugs 2 identisch ausgeführt aber nur von einer Seite dargestellt.

Nicht im Einzelnen dargestellt ist, dass der Schiebeplanenaufbau in ähnlicher Ausgestaltung auch Teil eines gewöhnlichen Anhängers oder Lastfahrzeugs sein könnte. Ebenfalls nicht dargestellt ist, dass alternativ oder zusätzlich eine Seitenplane in mehr oder weniger regelmäßigen Abständen an einem Holm gehalten und entlang des Holms verschiebbar ausgebildet ist.

In der Fig. 2 ist ein Detail des in der Fig. 1 dargestellten Schiebeplanenaufbaus 2 im Bereich eines Schlittens 8 dargestellt, der in der Darstellung der Fig. 2 jedoch von dem Überhang 10 der Plane 5 verdeckt ist. Die Plane 5 wird im dargestellten und insoweit bevorzugten Ausführungsbeispiel von einem Kragen 11 gehalten, die innerhalb einer Öse 12 der Plane 5 angeordnet ist. Dabei ist der Durchmesser des Kragens 11 größer als der Durchmesser der Öse 12. Durch den Kragen 11 ist ein Verbindungselement 13 von außen eingeführt, das den Kragen 11 und damit die Plane 5 formschlüssig am Schlitten 8 fixiert. Grundsätzlich könnte die Plane auch direkt unter Entfall des Kragens am Schlitten fixiert sein, auch wenn dies weniger bevorzugt ist. Von dem Verbindungsmittel ist lediglich das Kopfende 14 dargestellt.

Das dargestellte Verbindungselement 13 ist in einer im Wesentlichen horizontalen Richtung von außen montiert. Grundsätzlich, wenn auch weniger bevorzugt, könnte das Verbindungselement aber auch in einer im Wesentlichen vertikalen Richtung von außen montiert sein. Dann wäre vorzugsweise die in der Fig. 2 dargestellte Verbindung an der Oberseite des Dachs angebracht und das Profil des Schlittens und des Holms entsprechend an die geänderte Montagerichtung angepasst.

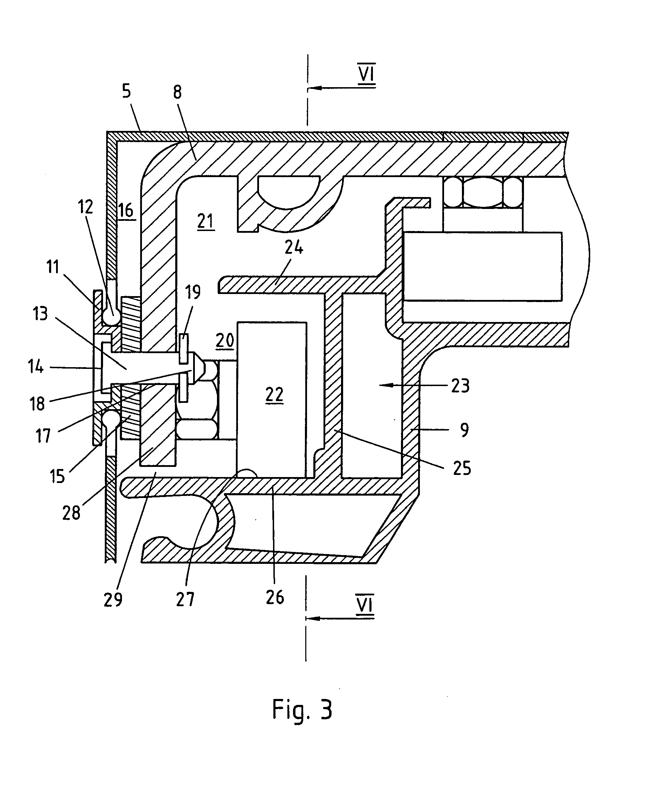

In der Fig. 3 ist das Detail des Schiebeplanenaufbaus 2 in einem vertikalen Schnitt dargestellt. Zwischen der Plane 5 und dem Schlitten 8 ist dabei eine Unterlegscheibe 15 vorgesehen, die an einer Außenseite 16 des Schlittens 8 anliegt. Der Schlitten 8 weist eine Öffnung 17 in Form einer Bohrung auf, durch die das Verbindungselement 13, das als Bolzen ausgebildet ist, von außen nach innen durchgesteckt ist. Das durchgesteckte Ende 18 des Verbindungselements 13 ist in einem Halteelement 19 gehalten, das in einem Zwischenraum 20 zwischen einer Innenseite 21 des Schlittens 8 und dem Holm 9 angeordnet ist. Da das Verbindungselement 13 im Zwischenraum mit dem Halteelement 19 verbunden ist, kann der Kragen 11, vorliegend auch die Öse 12, nach außen gegenüber dem Kopfende 14 des Verbindungselements 13 vorstehend angeordnet sein. Insgesamt führt die gegen Manipulation gesicherte Ausgestaltung des Schiebeverdecks 7 durch ein im Zwischenraum 20 vorgesehenes Halteelement 19 nicht zu einer Verbreiterung des Schiebeplanenaufbaus 2.
Im dargestellten und insoweit bevorzugten Ausführungsbeispiel ist der Schlitten 8 als Laufwagen mit zwei vertikalen Rollen 22 ausgebildet, die um zwei parallele im Wesentlichen horizontale Achsen drehbar gelagert sind. Das Halteelement 19 befindet sich zwischen den beiden Rollen 22. Zudem ist der benachbarte Teil des Holms 9 als U-Profil 23 ausgebildet. Vorliegend wird das U-Profil 23 von drei Schenkeln 24,25,26 gebildet, wobei der obere und der untere Schenkel 24,26 im Wesentlichen horizontal verlaufen, während der mittlere Schenkel 25 im Wesentlichen vertikal verläuft und die beiden anderen Schenkel 24,26 verbindet. Infolge der U-Form umgreift das U-Profil 23 die beiden innerhalb des U-Profils 23 angeordneten Rollen 22, die gemeinsam auf einer an der Innenseite des unteren Schenkels 26 angeordneten Lauffläche 27 abrollen. Der untere Schenkel 26 des U-Profils 23 ragt gegenüber dem unteren Rand 28 des Schlittens 8 nach außen hervor und bindet mit dem unteren Rand 28 des Schlittens 8 einen schmalen Spalt 29.

Grundsätzlich könnte beim dargestellten Schiebeplanenaufbau 2 auch auf den oberen Schenkel 24 verzichtet werden, wobei das an den Zwischenraum 20 angrenzende Teil des Holms 9 dann bedarfsweise als L-Profil ausgebildet ist. Dabei sollte der Schlitten 8 so ausgebildet sein, dass er nicht nach oben vom Holm 9 abgehoben werden kann.

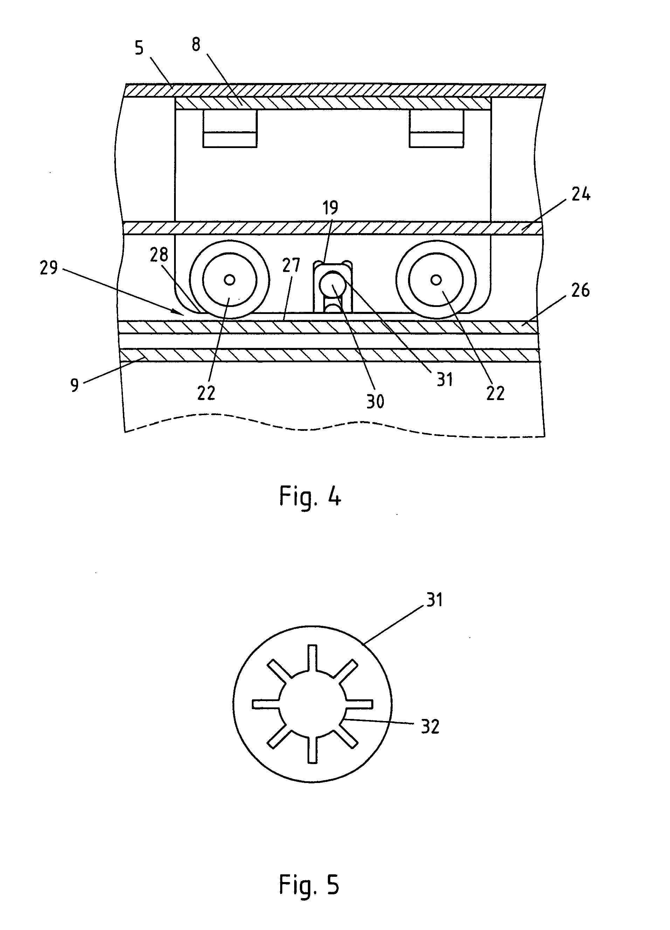

Der Holm 9 erstreckt sich mit im Wesentlichen unverändertem Querschnitt über die im Wesentlichen gesamte Länge des Nutzfahrzeugs 1, so dass der in den Fig. 3 und 4 dargestellte Zwischenraum 20 zwischen dem Holm 9 und dem Schlitten 8 an jeder Position des Schlittens 8 entlang des Holms 9 im Wesentlichen gleich ausgebildet ist.

Bei dem in den Fig. 3 und 4 dargestellten Halteelement 19 handelt es sich um eine Wellensicherung, die allgemein als SL-Sicherung bezeichnet wird. Die Sicherung ist auf das Schaftende 30 des in Form eines Bolzens ausgebildeten Verbindungselements 13 aufgesteckt. Dabei greift das Halteelement 19 formschlüssig in eine am Schaftende 30 des Verbindungselements 13 umlaufend vorgesehene Nut 31 ein. Wird das Verbindungselement 13 nach außen abgezogen, um Zugriff auf die Ladung des Nutzfahrzeugs 1 zu erhalten, fällt das Halteelement 19 innerhalb des U-Profils 23 nach unten. Das Verbindungselement 13 kann also nach erfolgter Manipulation erneut in den Schlitten 8 eingeschoben werden, ohne dass dadurch die Verbindung mit dem Halteelement 19 bzw. dem Schlitten 8 wiederhergestellt würde. Dazu müssten der Schlitten 8 vom Holm 9 getrennt und das Halteelement 19 wieder auf das Verbindungselement 13 aufgesteckt werden, was durch andere Maßnahmen verhindert ist.

Alternativ zu dem in den Fig. 3 und 4 dargestellten Halteelement 19 kann auch das in der Fig. 5 separat dargestellte Halteelement 31 vorgesehen sein. Das Halteelement 31 ist ebenfalls eine Wellensicherung und besitzt Zähne 32, die, ohne dass eine Nut vorgesehen sein muss, formschlüssig in ein Verbindungselements einschneiden können, wenn eine nach außen gerichtete Auszugskraft auf das Verbindungselement ausgeübt wird.

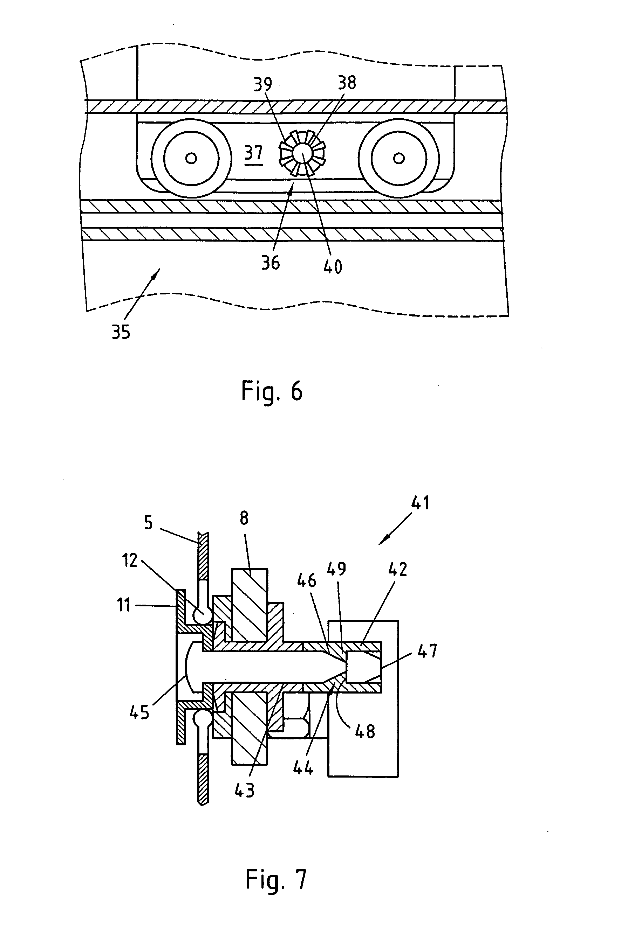

In der Fig. 6 ist ein Detail einer alternativen Ausgestaltung des Schiebeplanenaufbaus 35 aus einer Blickrichtung ähnlich der Blickrichtung gemäß Fig. 4 dargestellt. Der Schiebeplanenaufbau 35 unterscheidet sich lediglich in Bezug auf das Halteelement 36 von dem in den Fig. 1 bis 4 dargestellten Schiebeplanenaufbau 2. Das in der Fig. 6 dargestellte Halteelement 36 ist unverlierbar mit dem Schlitten 8 verbunden. Das Halteelement 36 ist aus einem Blech 37 gefertigt, das umlaufend zu einer zentralen Öffnung 38 eine Reihe von Stegen 39 aufweist. Die freien Enden der Stege 39 greifen im Bereich der zentralen Öffnung 38 in eine Nut des in den Zwischenraum 20 ragenden Endes des Verbindungselements 40 ein. Das Halteelement 36 ist dabei so ausgebildet, dass das Verbindungselement 40 zwar nach außen aus dem Halteelement 36 herausgezogen werden kann, dabei aber zerstört wird. Dies bedeutet, dass die Verbindung anschließend nicht durch bloßes Einstecken eines Verbindungselements 40 wieder hergestellt werden kann. Wenn das Halteelement 36 nicht dauerhaft zerstört wird, sollte zum Wiederherstellen der Verbindung zwischen dem Verbindungselement 40 und dem Halteelement 36 eine Montage von der Innenseite 21 des Schlittens 8 erfolgen. Unter Montage kann in diesem Zusammenhang auch lediglich das Wiederherstellen des Halteelements 36, also nicht zwingend nur eine neue Montage eines Halteelements verstanden werden.

In der Fig. 7 ist ein Teil eines Schiebeplanenaufbaus 41 dargestellt, der im Wesentlichen dem in den Fig. 1 bis 4 dargestellten Schiebeplanenaufbau 2 entspricht. Es sind jedoch sowohl ein anderes Halteelement 42 als auch ein anderes Verbindungselement 43 vorgesehen. Das Haltelement ist einteilig und in Form einer Hülse ausgebildet. Das Verbindungselement 43 weist eine Nut 44 mit einer dem Kopfende 45 des Verbindungselements 43 zugewandten abgeschrägten Nutflanke 46 und einer dem Schaftende 47 des Verbindungselements 43 zugewandeten Nutflanke 48 auf, die im Wesentlichen senkrecht zum Verbindungselement 43 ausgerichtet ist. In diese Nut greift ein Vorsprung 49 des Halteelements 42 derart ein, dass ein Herausziehen des Verbindungselements 43 aus dem Schlitten 8 zu einer dauerhaften Zerstörung des Halteelements 42 führt. Das Halteelement 42 muss dabei nicht in mehrere Teile zerfallen. Es reicht aus, wenn das Verbindungselement 43 nicht mehr ordnungsgemäß mit dem Halteelement 42 verbunden werden kann. Um bei der Manipulation eine irreversible Beschädigung des Haltelements 42 sicherzustellen, kann das Haltelement 42 vorzugsweise aus einem Kunststoff gefertigt sein

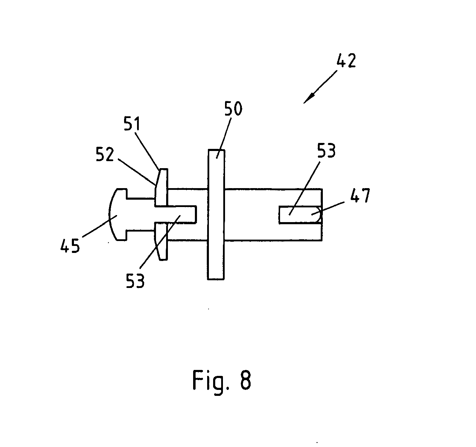

Das in Fig. 8 im Detail dargestellte Halteelement 42 weist zwei Flansche 50,51 auf. Ein innerer Flansch 50 ist auf der Innenseite 21 des Schlittens 8 angeordnet und verhindert ein Herausziehen des Halteelements 42 nach außen. Gleichzeitig verhindert der innere Flansch 50 eine Montage des Halteelements 42 von der Außenseite 16 des Schlittens 8. Das Halteelement 42 muss von der Innenseite 21 des Schlittens 8 montiert und dabei teilweise durch die Öffnung 17 im Schlitten 8 hindurch gesteckt werden, wobei der innere Flansch 50 als Anschlag bei der Montage dient. Ein äußerer Flansch 51 ist auf der Außenseite 16 des Schlittens 8 angeordnet. Damit das Halteelement 42 dennoch von der Innenseite 21 des Schlittens 8 montiert werden kann, sind in das äußere Ende 52 des Halteelements 42 zwei Aussparungen 53 in Form von Kerben vorgesehen, die bis in den äußeren Flansch 51 hinein reichen und in Bezug auf den Umfang des Flanschs 51 einander gegenüberliegend angeordnet sind. Das äußere Ende 52 des Halteelements 42 kann also zusammengedrückt und dann durch die Öffnung 17 des Schlittens 8 hindurch gesteckt werden.

Ein Zurückschieben des Halteelements 42, das leicht zu einer Demontage des Halteelements 42 führen würde, ist ausgeschlossen. Im montierten Zustand ist im äußeren Ende 52 des Haltelements 42 das Verbindungselement 43 aufgenommen, so dass das äußere Ende 52 des Halteelements 42 nicht mehr zusammengedrückt werden kann. Dies gilt insbesondere dann, wenn das Verbindungselement 43 aus einem Metall gefertigt ist.

Der äußere Flansch 51 des Halteelements liegt bei dem in Fig. 7 dargestellten Ausführungsbeispiel am Kragen 11 an. Es könnte allerdings auch vorgesehen sein, dass der äußere Flansch 51 am Schlitten 8 anliegt.

Das in den Fig. 7 und 8 dargestellte Halteelement 42 hat den Vorteil, dass die Montage im Zwischenraum 20 zwischen dem Schlitten 8 und dem Holm 9 nicht nur wegen der schlechten Erreichbarkeit des Halteelements 42, sondern auch deshalb ausgeschlossen ist, weil der Zwischenraum 20 zu schmal ist, um das Halteelement 42 im Zwischenraum 20 so zu positionieren, wie es für eine Montage des Halteelements 42 erforderlich wäre.

## Patentansprüche

1. Schiebeplanenaufbau (2) eines Nutzfahrzeugs (1), insbesondere Lastwagens, Anhängers, Sattelaufliegers und/oder Wechselbehälters,
- mit einer Plane (5) zum Abdecken des Schiebeplanenaufbaus (2), wenigstens einem Holm (9) und wenigstens einem zum Öffnen des Schiebeplanenaufbaus (2) entlang des Holms (9) verschiebbaren Schlitten (8),
- wobei die Plane (5) über ein Verbindungselement (13,40,43) an einer Außenseite (16) des Schlittens (8) fixiert ist,
- wobei das Verbindungselement (13,40,43) mit einem Halteelement (19,31,36,42) verbunden und über das Halteelement (19,31,36,42) unverlierbar am Schlitten (8) gehalten ist,
- wobei das Verbindungselement (13,40,43) von einer Außenseite des Schlittens (8) montiert ist,
- wobei das Halteelement (19,31,36,42) in einem Zwischenraum (20) zwischen dem Schlitten (8) und dem Holm (9) vorgesehen ist und
- wobei das Halteelement (19,31,36,42) und der Zwischenraum (20) derart aufeinander abgestimmt sind, dass eine Montage des Haltelements (19,31,36,42) im Zwischenraum (20) verhindert ist,
**dadurch gekennzeichnet, dass**
- einerseits der Schlitten (8) zwei Rollen (22) aufweist und das Halteelement (19,31,36,42) derart zwischen den beiden Rollen (22) angeordnet ist, so dass das Halteelement (19,31,36,42) von den beiden Rollen von einander gegenüberliegenden Seiten abgeschirmt und die Zugänglichkeit des Halteelements eingeschränkt ist, und/oder
- andererseits der Holm (9) unter Ausbildung eines Spalts (29) mit dem unteren Rand (28) des Schlittens (8) gegenüber diesem nach außen vorsteht.

2. Schiebeplanenaufbau nach Anspruch 1,
**dadurch gekennzeichnet,**
**dass** das Halteelement (19,31,36,42) und der Zwischenraum (20) derart aufeinander abgestimmt sind, dass eine Montage des Haltelements (19,31,36,42) im Zwischenraum (20) unabhängig von der Position des Schlittens (8) entlang des Holms (9) verhindert ist.

3. Schiebeplanenaufbau nach Anspruch 1 oder 2,
**dadurch gekennzeichnet,**
**dass** das Halteelement (19,31,36,42) einteilig ausgebildet ist.

4. Schiebeplanenaufbau nach einem der Ansprüche 1 bis 3,
**dadurch gekennzeichnet,**
- **dass** der Schlitten (8) zwei gemeinsam auf einer Lauffläche (27) des Holms (9) abrollende Rollen (22) aufweist.

5. Schiebeplanenaufbau nach Anspruch 4,
**dadurch gekennzeichnet,**
**dass** die Lauffläche (27) an einem Schenkel (26) eines L-Profils, vorzugsweise U-Profils (23), des Holms (9) angeordnet ist.

6. Schiebeplanenaufbau nach einem der Ansprüche 1 bis 5,
**dadurch gekennzeichnet,**
**dass** der Holm (9), vorzugsweise das L-Profil, weiter vorzugsweise das U-Profil (23), bis auf einen Spalt (29) an einen unteren Rand (28) des Schlittens (8) heranreicht.

7. Schiebeplanenaufbau nach Anspruch 6,
**dadurch gekennzeichnet,**
**dass** das L-Profil, vorzugsweise das U-Profil (23), unter Ausbildung eines Spalts (29) mit dem unteren Rand (28) des Schlittens (8) gegenüber diesem nach außen vorsteht.

8. Schiebeplanenaufbau nach einem der Ansprüche 1 bis 7,
**dadurch gekennzeichnet,**
**dass** das Verbindungselement (13,40,43) formschlüssig mit dem Halteelement (19,31,36,42) verbunden ist.

9. Schiebeplanenaufbau nach einem der Ansprüche 1 bis 8,
**dadurch gekennzeichnet,**
**dass** das Halteelement (19,31,36,42) unverlierbar, vorzugsweise formschlüssig, mit dem Schlitten (8) verbunden ist.

10. Schiebeplanenaufbau nach einem der Ansprüche 1 bis 9,
**dadurch gekennzeichnet,**
**dass** das Halteelement (19,31,36,42) von einer Innenseite (21) in den Schlitten (8) eingesteckt, vorzugsweise durch eine Öffnung (17) des Schlittens (8) durchgesteckt, ist.

11. Schiebeplanenaufbau nach Anspruch 10,
**dadurch gekennzeichnet,**
**dass** das Halteelement (19,31,36,42) wenigstens einen Flansch (50,51) an einer Außenseite (16) und/oder Innenseite (21) des Schlittens (8) aufweist.

12. Schiebeplanenaufbau nach Anspruch 11,
**dadurch gekennzeichnet,**
**dass** das der Außenseite (16) des Schlittens (8) zugewandte Ende des Haltelements (19,31,36,42) zum Zusammendrücken und Durchstecken durch die Öffnung (17) des Schlittens (8) ausgebildet ist.

13. Schiebeplanenaufbau nach einem der Ansprüche 1 bis 12,
**dadurch gekennzeichnet,**
**dass** das Halteelement (19,31,36,42) derart ausgebildet ist, dass eine Demontage des Halteelements (19,31,36,42) vom Schlitten (8) bei eingesetztem Verbindungselement (13,40,43) verhindert ist.

14. Schiebeplanenaufbau nach einem der Ansprüche 1 bis 13,
**dadurch gekennzeichnet,**
**dass** die Plane (5) über mehrere Verbindungselemente (13,40,43) an den Außenseiten (16) mehrerer an einem und/oder gegenüberliegenden Rändern der Plane (5) vorgesehenen Schlitten (8) fixiert ist.

15. Schiebeplanenaufbau nach einem der Ansprüche 1 bis 14,
**dadurch gekennzeichnet,**
**dass** die Plane (5) eine Verdeckplane eines Schiebeverdecks (7) ist.

## Claims

1. Sliding tarpaulin body (2) of a commercial vehicle (1), in particular a lorry, a trailer, semitrailer and/or swap body,
- with a tarpaulin (5) to cover the sliding tarpaulin body (2), at least one crosspiece (9) and at least one carriage which is movable along the crosspiece (9) to open the sliding tarpaulin body (2),
- wherein the tarpaulin (5) is secured to outer side (16) of the carriage (8) via a connecting element (13, 40, 43),
- wherein the connecting element (13, 40, 43) is connected to a retaining element (19, 31, 36, 42) and is held undetachably on the carriage (8) via the retaining element (19, 31, 36, 42).
- wherein the connecting element (13, 40, 43) is mounted from an outer side of the carriage (8),
- wherein the retaining element (19, 31, 36, 42) is provided in a space (20) between the carriage (8) and the crosspiece (9) and
- wherein the retaining element (19, 31, 36, 42) and the space (20) are adapted to each other in such a way that mounting the retaining element (19, 31, 36, 42) in the space (20) is prevented,
**characterised in that**
- one the one hand the carriage (8) has two rollers (22) and the retaining element (19, 31, 36, 42) is arranged between the two rollers in such a way so that the retaining element (19, 31, 36, 42) is protected by the two rollers located on opposite sides to each other and accessibility to the retaining element is restricted, and/or
- on the other hand the crosspiece (9) by forming a gap (29) with the lower edge (28) of the carriage (8) protrudes outwards in relation to the latter.

2. Sliding tarpaulin body according to Claim 1, **characterised in that** the retaining element (19, 31, 36, 42) and the space (20) are adapted to each other in such a way that mounting the retaining element (19, 31, 36, 42) in the space (20) is prevented irrespective of the position of the carriage (8) along the crosspiece (9).

3. Sliding tarpaulin body according to Claim 1 or 2, **characterised in that** the retaining element (19, 31, 36, 42) is of one-piece design.

4. Sliding tarpaulin body according to any one of Claims 1 to 3,**characterised in that**
- the carriage (8) has two rollers (22) which roll together on the running surface (27) of the crosspiece (9).

5. Sliding tarpaulin body according to Claim 4, **characterised in that** the running surface (27) is arranged on a limb (26) of an L profile, preferably of a U profile, of the crosspiece (9).

6. Sliding tarpaulin body according to any one of Claims 1 to 5, **characterised in that** the crosspiece (9), preferably the L profile, more preferably the U profile, approximates a lower edge (28) of the carriage (8) up to a gap (29).

7. Sliding tarpaulin body according to Claim 6, **characterised in that** the L profile, preferably the U profile, by forming a gap (29) with the lower edge (28) of the carriage (8) protrudes outwards in relation to the latter.

8. Sliding tarpaulin body according to any one of Claims 1 to 7, **characterised in that** the connecting element (13, 40, 43) is connected in a form-fit manner to the retaining element (19, 31, 36, 42).

9. Sliding tarpaulin body according to any one of Claims 1 to 8, **characterised in that** the retaining element (19, 31, 36, 42) is connected permanently, preferably in a form-fit manner, to the carriage (8).

10. Sliding tarpaulin body according to any one of Claims 1 to 9, **characterised in that** the retaining element (19, 31, 36, 42) is inserted into the carriage (8) from an inner side (21), preferably inserted through an opening (17) in the carriage (8).

11. Sliding tarpaulin body according to Claim 10, **characterised in that** the retaining element (19, 31, 36, 42) has at least one flange (50, 51) on an outer side (16) and/or inner side (21) of the carriage (8).

12. Sliding tarpaulin body according to Claim 11, **characterised in that** the end of the retaining element (19, 31, 36, 42) facing the outer side (16) of the carriage (8) is designed for pressing together and inserting through the opening (17) in the carriage (8).

13. Sliding tarpaulin body according to any one of Claims 1 to 12, **characterised in that** the retaining element (19, 31, 36, 42) is designed in such a way that dismounting the retaining element (19, 31, 36, 42) from the carriage (8) when inserting the connecting element (13, 40, 43) is prevented.

14. Sliding tarpaulin body according to any one of Claims 1 to 13, **characterised in that** the tarpaulin (5) is secured via a plurality of connecting elements (13, 40, 43) to the outer sides (16) of a plurality of carriages (8) provided on one and/or mutually opposed edges of the tarpaulin (5).

15. Sliding tarpaulin body according to any one of Claims 1 to 14, **characterised in that** the tarpaulin (5) is a cover tarpaulin of a sliding cover (7).

## Revendications

1. Structure de bâche coulissante (2) pour un véhicule utilitaire (1), en particulier pour un camion, une remorque, une semi-remorque et / ou un conteneur interchangeable,
- avec une bâche (5), destinée à recouvrir la structure de bâche coulissante (2), au moins un longeron (9) et au moins un coulisseau (8), mobile le long du longeron (9), pour l'ouverture de la structure de bâche coulissante (2),
- sachant que la bâche (5) est fixée, au moyen d'un élément de liaison (13, 40, 43), sur un côté extérieur (16) du coulisseau (8),
- l'élément de liaison (13, 40, 43) étant relié à un élément de maintien (19, 31, 36, 42) et fixé au coulisseau (8) de manière imperdable, au moyen de l'élément de maintien (19, 31, 36, 42),
- sachant que l'élément de liaison (13, 40, 43) est monté à partir d'un côté extérieur du coulisseau (8),
- l'élément de maintien (19, 31, 36, 42) étant prévu dans un espace intermédiaire (20), entre le coulisseau (8) et le longeron (9), et
- sachant que l'élément de maintien (19, 31, 36, 42) et l'espace intermédiaire (20) sont adaptes l'un à l'autre de sorte à empêcher un montage de l'élément de maintien (19, 31, 36, 42) dans l'espace intermédiaire (20),
**caractérisée en ce que**
- d'une part, le coulisseau (8) est doté de deux rouleaux (22) et que l'élément de maintien (19, 31, 36, 42) est disposé entre les deux rouleaux (22), de sorte que l'élément de maintien (19, 31, 36, 42) soit masqué, de deux côtés opposés, par les deux rouleaux (22), et que l'accès de l'élément de maintien soit limité, et / ou
- d'autre part, le longeron (9) est en saillie vers l'extérieur, par rapport au bord inférieur (28) du coulisseau (8), en formant un intervalle (29).

2. Structure de bâche coulissante selon la revendication 1, **caractérisée en ce que** l'élément de maintien (19, 31, 36, 42) et l'espace intermédiaire (20) sont adaptés l'un à l'autre de sorte qu'un montage de l'élément de maintien (19, 31, 36, 42) dans l'espace intermédiaire (20) soit empêché indépendamment de la position du coulisseau (8) le long du longeron (9).

3. Structure de bâche coulissante selon revendication 1 ou 2, **caractérisée en ce que** l'élément de maintien (19, 31, 36, 42) est formé d'une pièce.

4. Structure de bâche coulissante selon l'une des revendications 1 a 3, **caractérisée en ce que** le coulisseau (8) est doté de deux rouleaux (22), qui roulent en commun sur une surface de roulement (27) du longeron (9).

5. Structure de bâche coulissante selon la revendication 4, **caractérisée en ce que** la surface de roulement (27) est disposée, sur une branche (26) du profilé en L, de préférence du profilé en U (23) du longeron (9).

6. Structure de bâche coulissante selon l'une des revendications 1 à 5, **caractérisée en ce que** le longeron (9), de préférence le profilé en L, de préférence le profilé en U (23) parvient, à part un intervalle (29), jusqu'à un bord inférieur (28) du coulisseau (8).

7. Structure de bâche coulissante selon la revendication 6, **caractérisée en ce que** le profilé en L, de préférence le profilé en U (23), fait saillie vers l'extérieur par rapport au bord inférieur (28) du coulisseau (8), en formant un intervalle (29) avec celui-ci.

8. Structure de bâche coulissante selon l'une des revendications 1 à 7, **caractérisée en ce que** l'élément de liaison (13, 40, 43) est relié par emboîtement à l'élément de maintien (19, 31, 36, 42).

9. Structure de bâche coulissante selon l'une des revendications 1 à 8, **caractérisée en ce que** l'élément de maintien (19, 31, 36, 42) est relié au coulisseau (8) de manière imperdable, de préférence par emboîtement.

10. Structure de bâche coulissante selon l'une des revendications 1 à 9, **caractérisée en ce que** l'élément de maintien (19, 31, 36, 42) est introduit, à partir d'un côté intérieur (21), dans le coulisseau (8), de préférence par une ouverture (17) du coulisseau (8).

11. Structure de bâche coulissante selon la revendication 10, **caractérisée en ce que** l'élément de maintien (19, 31, 36, 42) est doté d'au moins un flasque (50, 51) sur un côté extérieur (16) et / ou un côté intérieur (21) du coulisseau (8).

12. Structure de bâche coulissante selon la revendication 11, **caractérisée en ce que** l'extrémité de l'élément de maintien (19, 31, 36, 42), orientée vers le côté extérieur (16) du coulisseau (8), est conçue pour être comprimée et passée à travers l'ouverture (17) du coulisseau (8).

13. Structure de bâche coulissante selon l'une des revendications 1 à 12, **caractérisée en ce que** les éléments de maintien (19, 31, 36, 42) sont conçus de sorte que les éléments de maintien (19, 31, 36, 42) ne puissent pas être démontés du coulisseau (8), quand l'élément de liaison (13, 40, 43) est mis en place.

14. Structure de bâche coulissante selon l'une des revendications 1 à 13, **caractérisée en ce que** la bâche (5) est fixée, au moyen de plusieurs éléments de liaison (13, 40, 43), sur les côtés extérieurs (16) de plusieurs coulisseaux (8), qui sont prévus sur un bord et / ou sur des bords opposés de la bâche (5).

15. Structure de bâche coulissante selon l'une des revendications 1 à 14, **caractérisée en ce que** ladite bâche (5) est une bâche de toit d'un toit coulissant (7).
